# EUROPEAN PATENT SPECIFICATION

(11) **EP 3 203 094 B1**
(45) Date of publication and mention of the grant of the patent: **22.09.2021**
(21) Application number: 16275019.4
(22) Date of filing: 04.02.2016
(51) Int. Cl.: F16C 3/02, F16C 7/02, B29C 67/00, B29D 99/00, B29L 31/24

(54) **COMPOSITE SHAFT JOINT**
FASERVERBUND-WELLENVERBINDUNG
JOINT D'ARBRE COMPOSITE

(43) Date of publication of application: 09.08.2017
(73) Proprietor: Crompton Technology Group Limited, Solihul, West Midlands B90 4SS (GB)
(72) Inventor: POLLITT, William, Banbury, Oxfordshire OX16 4XD (GB)
(74) Representative: Dehns

(56) References cited:
- WO-A1-2006/017995
- AU-B2- 2002 301 129
- AU-B3- 673 325
- US-A- 4 256 412

## Description

### Technical Field

This disclosure relates to transmission shaft joints for joining end fittings to composite transmission shafts. It relates to tension/compression transmission shafts or struts as well as torque transmission shafts and dual purpose shafts.

### Background

Composite transmission shafts are typically formed from Polymer Matrix Composites (PMCs) which comprise some form of fibre or polymer encased within a matrix such as resin. One example is Carbon Fibre Reinforced Polymer (CFRP). Filament wound structures are typically formed by winding filaments such as carbon fibres around a mandrel in a helical fashion so as to build up a tube shaped shaft. The angle of the helical winding influences the properties of the shaft. For example, windings approaching 45 degrees have higher torsional properties and those higher than 45 degrees have greater properties in the hoop direction. About 45 degrees is generally optimal for torque transmission. Other techniques for manufacturing PMCs include braiding, fibre placement techniques (including AFP), prepreg wrap techniques and pultrusion methods. The method of forming the filament-based composite is not particularly important. Composite shafts may involve several layers, with different layers having different properties. For example, the fibre angle may be varied between layers to give different properties such as for bending resistance or impact resistance.

Creating regions that sustain bearing loads required for transmission of tension/compression or torque would be problematic with a purely composite solution, so it is desirable to be able to attach metallic ends to a shaft. Forces are then transmitted through such end fittings which are typically mechanically attached to the ends of the shaft.

It is desirable that the joint between the shaft and the end fittings be structurally efficient so as to minimise weight while ensuring good force transmission and good joint robustness.

One problem with attaching end fittings onto a shaft is ensuring that the force applied to the end fitting is distributed throughout the material of the shaft. For example, in the case of layered (multi-ply) PMC shafts such as composite filament-wound shafts, the problem lies in ensuring that the load transfer between the end fittings and the shaft is distributed amongst all filament layers. The thickness of a composite filament-wound shaft is typically built up from a number of layers of helically wound filaments. Attaching an end fitting to the shaft by a simple mechanical press fit over the shaft would result in the end fitting interfacing only with the outermost plies. The load transfer between plies would then be reliant on the interlaminar shear strength of the laminate to distribute the load to adjacent plies, leading to a weaker component. This interlaminar shear strength is in large part determined by the properties of the resin matrix in which the filaments are bound rather than being determined by the filaments themselves. This problem remains even when shallow splines or a threaded connection are used as such shallow teeth only engage with surface layers. Full depth splines (that cut through all layers) are not a practical solution as they weaken the composite material too much.

US 2012/0060636 A1 describes a clamping-type joint in which the composite fibres are trapped between a nut located inside the tube of composite and an external collar that surrounds the tube of composite. A threaded end fitting component can be used to move the nut and the collar closer together, thus clamping the shaft fibres therebetween.

US 2006/0258469 A1 describes a method of forming a composite shaft such that an internally splined end fitting can be axially press fit over the shaft with good torsional load transfer properties. US 2008/0012329 A1 describes a particularly advantageous spline profile for this joint.

AU 673325 B3 discloses a high-pressure fiber reinforced composite pipe joint. US4256412 discloses an axially extending rod-shaped connection element in which a plastic material part and a transition element are connected in an overlapping arrangement. AU 2002301129 discloses an interface system between an end of a filament composite tube and an end fitting, including a plurality of traplocks.

### Summary

According to this disclosure, there is provided a composite shaft as claimed in claim 1.

The end fitting is typically metallic (although it could be formed from any suitable material) and typically has a generally cylindrical attachment portion on which the taper is provided and a flanged portion to which external components are attached so that the shaft may act as an actuator rod or other force transmission component. It will be appreciated that the joint described here may be used in a wide range of applications, wherever tension/compression elements or torque transmission elements may be used. Some example applications include aerospace applications such as piston rods, struts, control actuators, etc. Other applications include drive shafts or actuators for torque transmission.

Tapering the shaft and the end fitting means that the process for engaging the two together can be accomplished in less time and over a short distance. The taper allows a certain amount of axial overlap between the two parts before contact is made between the end fitting and the interface region of the shaft. When contact is made, it is made along substantially the whole of the interface region simultaneously. Further axial movement between the two parts results in further overlap of the two parts. Importantly, the taper on the shaft exposes a significant cross section of the shaft to the end fitting and results in engagement with the end fitting across that exposed portion. This ensures that engagement is not simply with the innermost surface portion of the shaft, reducing the chance of delamination when force is transmitted across the joint.

When compared with existing methods in which a shaft is engaged with an end fitting across an interface region whose surface is parallel with the axis, the shorter engagement distance along which contact is required means that there is less heat build-up due to friction between the parts and less time is required to complete the joint (thus making assembly faster and more efficient).

The tapered surface of the end fitting is a toothed surface. Contact between the two surfaces results in engagement of the toothed surface with the shaft so as to facilitate force transmission between the two parts. In this document, the terms "tooth" and "teeth" (and related terms such as "toothed surface") encompass both axial splines and helical threads of any angle.

The shaft is a multi-layer filament shaft and the tapered interface region exposes a plurality of layers of filaments to the toothed surface. For example a filament-wound shaft may typically be formed by winding filaments around a mandrel in a helix (with varying helix angle, depending on application) back and forth so as to build up multiple plies (or layers) of filaments to the desired thickness. As described above, different layers may be formed with different helix angles to give different properties to the finished product. The wound filaments are normally coated in or soaked in resin so as to form a matrix of resin and filaments that is cured to solidify and form the final composite.

Tapering the interface region by cutting or grinding or by any other material removal process to expose the filament ends ensures that all, or most layers of fibres (typically helical plies of fibres) that form the shaft are engaged with the end fitting, thus ensuring excellent load sharing of forces between the end fitting and the shaft. Distributing the applied forces across more fibres, in particular across more fibre plies of the shaft greatly increases the strength of the joint. During the mounting process, in some examples the teeth of the toothed surface are driven into the composite shaft, between the fibre ends, compressing the fibres and thus forming a very strong attachment. As more of the teeth engage with the interface region the strength of the joint increases. The teeth cut into and remove material from the composite shaft. In other examples a thread-receiving channel or spline-receiving channels may be machined (e.g. pre-cut) into the shaft prior to fitting the end fitting. This has the advantage of reducing the assembly load and hence the layers of the shaft can be optimised to suit the operational loads not the loads for assembly.

The joint is structurally efficient in terms of its strength to weight ratio. The fitting can be formed as a single piece, and can use less material (e.g. less metal) and less composite in the joint region compared with other joining techniques. This also reduces cost and is simple to manufacture and assemble.

The shaft is a hollow tube and the taper is formed on the inside of the shaft, i.e. so that the inner diameter of the shaft increases towards the end of the shaft. This forms a concave conical end to the shaft (most likely not a complete cone, resulting in a concave frustoconical shaped end). The end fitting then has a convex cone shape (or frustoconical shape) that matches and engages therewith.

It will be appreciated that both inner and outer tapers could be used on the same shaft (and indeed on the same end of the shaft) in some examples.

The angle of the taper may be selected according to the desired purpose of the shaft, e.g. the expected loads to be transferred across the joint and whether the joint is for predominantly axial loading, predominantly torque loading or a mixture of both. However, generally a narrower angle of taper (with respect to the shaft axis) will result in more frictional engagement which results in a stronger joint. In some preferred examples, the taper is at an angle to the shaft axis of no more than 20 degrees, preferably no more than 15 degrees, more preferably no more than 10 degrees, more preferably still no more than 7 degrees.

The toothed surface preferably has a profile that comprises a cutting tooth portion arranged to cut into said interface region and a substantially flat land portion that frictionally engages with the interface region. A section taken substantially perpendicular to the direction of the teeth will preferably exhibit alternating teeth and lands.

The profile may further comprise at least one channel portion adjacent to the cutting tooth portion to accommodate debris produced during a mounting process. The channel portion may be provided between the tooth portion and the flat land portion. Where axial grooves are also formed across the toothed portion (discussed below), these channels may feed into the grooves, thus providing a route for debris to escape or collect during the mounting process.

The toothed surface may take different forms depending on the intended loading of the joint, e.g. axial, torsional or mixed loading.

In some examples, the toothed surface may comprise a plurality of teeth, each tooth formed as an axial spline engaging with the interface region. These axial splines extend in a substantially straight line in a plane with the shaft axis (but with a radial component due to the taper). To engage the axial splines with the interface region, the end fitting is pressed axially onto the shaft (preferably with lubrication to facilitate the relative movement) so that the splines cut into the exposed surface of the shaft material. Such axial splines are more suited to torque transmission than axial load transmission as sufficiently strong axial forces could result in disengagement of the splines from the interface region of the shaft.

The lubricant may be a liquid adhesive that reduces the coefficient of friction during assembly. The adhesive is not primarily for strengthening the joint, but may seal the joint by sealing any composite surface that has been exposed by the material removal process.

In other examples, the toothed surface may comprise at least one tooth formed as a helical thread engaging with the interface region. The helical thread (or plurality of helices in the case of a multi-start thread arrangement) extends substantially circumferentially around the interface region (although also with an axial component so as to form a helix). To engage the helical thread(s) with the interface region, the end fitting and shaft are rotated relative to one another so as to twist the end fitting onto the shaft. Preferably at the same time, an axial relative movement is induced at a rate of one thread pitch per full rotation. This helps to ensure that the thread cuts into the interface region in the right direction for the thread angle. Again, lubricant is preferably used to ease the joining process. The thread angle may be varied depending on the intended loading. A high angle (close to perpendicular to the shaft axis) will be best for purely axial loads, while a lower angle will improve torque transmission properties. For example a thread angle of 45 degrees to the shaft axis gives good transmission properties for mixed torque / axial loads. To maximise the efficiency of force transfer in the axial direction (i.e. for tension/compression), it is desirable to make the thread is perpendicular as possible to the shaft axis. This has the effect of increasing the amount of cutting required to fully screw the end fitting onto the shaft. However, the taper of the shaft and the end fitting reduces the distance that needs to be screwed (compared with a non-tapered joint) and thus reduces the amount of cutting making a high thread angle possible.

Mounting the end fitting to the shaft via a helical thread makes the joint more suitable for transmitting axial forces than a joint that is engaged via axial splines onto the interface region. This helical attachment thus forms a tension/compression joint that is more suitable for shafts that transmit tension and/or compression forces.

The end fitting may further comprise one or more grooves that cross the teeth of the toothed surface and divide at least one tooth into a plurality of tooth-sections. In some preferred examples, the grooves may be axial grooves (which cross helical threaded teeth) or they may be helical grooves (which may cross either axial spline teeth or helical threaded teeth). The grooves have the advantage of reducing the torque required to affix the end fitting. The grooves allow debris that is cut from the interface region by the teeth to be accommodated within the grooves, thus either finding a path out of the joint completely, or at least not further obstructing or resisting the mounting process. Any number of such grooves may be used providing sufficient engagement remains to keep the joint parts securely fixed together and to ensure effective load transfer across the joint. In some examples four axial grooves across helical threads are provided, e.g. every 90 degrees around the shaft.

A multi-start thread may be used on the end fitting, i.e. one with multiple adjacent helices interleaved with one another. However, in some preferred examples the thread is a single-start thread. The multi-start thread may have advantages in reducing the number of turns required to mount the end fitting onto the shaft, but it also requires a reduction in the angle between the threads and the shaft axis (i.e. the threads must be less perpendicular to the shaft axis) which, as discussed before diverges from the ideal, perpendicular arrangement for axial load transmission. Therefore such arrangements may be better suited where axial loads are not excessive, e.g. especially where loads are predominantly torsional.

According to a further aspect of this disclosure, there is provided a method of mounting an end fitting onto a shaft as claimed in claim 7.

The preferred features described above in relation to the apparatus apply equally to the method.

In particular, the end fitting has a toothed surface and the end fitting may comprise a helical thread; and the method may comprise screwing the end fitting onto the shaft while the end fitting is driven axially at a rate equal to one thread pitch per rotation. Driving the two joints together in this way reduces the friction that progressively builds up as the teeth engage with the interface region. It also reduces tearing of the interface region before sufficient engagement has been achieved between the two mating surfaces.

The taper is formed on the inside of a hollow shaft, so the cutting or grinding process (or other material removal process) used to form the taper applies forces in the radially outward direction which the shaft may not be designed to resist. Therefore, in some preferred examples, the tapered interface region is formed by winding filaments around the external surface of the shaft at the axial position of the interface region and then cutting or grinding the internal surface to form the taper. These hoop-wound filaments resist the outward forces of the cutting or grinding process, preventing damage or displacement of the main filament plies of the shaft. These additional hoop-wound filaments may be considered temporary and can be later removed if desired to return the outer surface profile of the shaft to its original shape. However, the hoop-wound filaments also add hoop stiffness that maintains the pressure of the interface and hence increases the strength of the joint. Therefore it may alternatively be preferred to leave the hoop-wound filaments in place. The hoop reinforcement may be added to the outside surface. The hoop reinforcement may be co-wound with the tube or it may be formed as a hoop-wound composite ring manufactured in a separate operation and then fitted onto or into the composite tube. In other examples a different support structure such as a metal ring may be used instead and fitted onto or into the composite tube.

One major advantage of the tapered interface is that the main shaft formation process need not be altered from a standard process. For example, filament wound shafts can be wound and cured as normal and the taper applied later. This means that shafts do not need to be specifically made to the exact length required. Instead, shaft can be produced in long lengths and cut to size. The cut length of shaft can then have the tapered interface region formed as required. Further, the angle of the taper need not be determined until the interface region is created, thus allowing a single shaft fabrication process to be used flexibly for many different purposes. Therefore, in certain preferred examples, the shaft is formed by cutting a length from a longer shaft and subsequently forming the interface region adjacent to the cut. For example, the process allows stock lengths of PMC to be manufactured without consideration of the axial location of the end fittings.

### Brief description of drawings

One or more non-limiting examples will now be described, by way of example only, and with reference to the accompanying figures in which:
Fig. 1 shows a convex tapered end fitting with helical toothed thread joining to a concave tapered shaft;
Fig. 2 shows a convex tapered end fitting with axial spline teeth joining to a concave tapered shaft;
Fig. 3 shows a non-claimed example of a concave tapered end fitting with a helical toothed thread joining to a convex tapered shaft;
Fig. 4 shows a concave tapered end fitting with axial spline teeth;
Fig. 5 illustrates a non-claimed example of a cross-section of a concave tapered end fitting with helical teeth joined to a convex tapered shaft; and
Fig. 6 shows an example of a tooth profile in more detail.

Composites can be made very structurally efficient (i.e. a high strength to weight ratio), however this efficiency is usually reduced in interfacing with metallic elements which may be required, e.g. for connection to other devices or equipment. A structurally efficient tension-compression joint has applications in struts, control linkages and rods, including piston rods. Such composite rods may experience any of tension/compression, bending and torque loads, depending on the application.

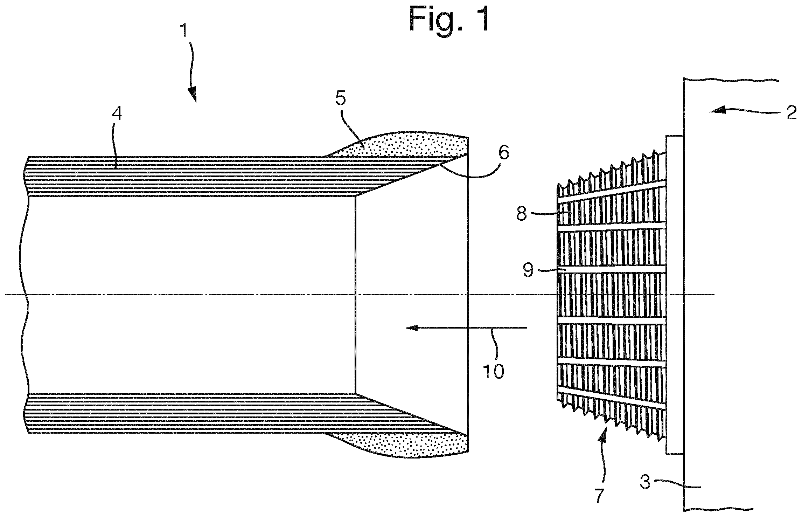

Fig. 1 shows a joint between a composite shaft 1 which in this example is a filament-wound rod with filaments embedded within a resin matrix (although it will be appreciated that other composite shaft constructions may also be used) and a metal end fitting 2. The metal end fitting 2 is provided with a flange 3 for attachment to other equipment (not shown), typically via bolts (also not shown).

The shaft 1 has multiple layers (plies) of filaments 4 built up to a required thickness. The composite shaft 1 could be filament wound on a parallel mandrel with a laminate suitable for the loads required (e.g. mostly low angle fibre for tension/compression, high angle fibre for torque transmission). The shaft 1 is hollow, having been formed on a mandrel, but this is not essential. Additional hoop fibre 5 (i.e. essentially circumferential windings) is provided in the end region (at the joint region) to support the joint, although in other embodiments this may not be required as discussed below. The interface region 6 (i.e. the region where the shaft 1 will contact and engage with the end fitting 2) is tapered so as to form a concave region at the end of the shaft 1. The taper is thus formed on the internal surface of the shaft 1 such that the internal diameter increases towards the end of the shaft 1. As the fibres 4 of shaft 1 form plies or layers which are essentially concentric rings, the taper cuts through many layers, exposing the ends of the fibres 4 in each layer in the interface region 6. In this way, the tapered interface region 6 ensures connection with all plies rather than just a few surface plies, thus sharing the load better.

The end fitting 2 is typically metal (although other materials may be used in some applications) and is formed with a convex tapered portion 7. The taper angle of this portion 7 matches the angle of the taper on the shaft 1 so that the two mate together neatly. The outer surface of the convex tapered portion 7 is a toothed surface, i.e. it has one or more teeth formed thereon that are arranged to cut into the interface region 6 of the shaft 1. The thread or groove form in the composite could be machined in prior to assembly but it is preferred that the threads or grooves are cut by the end fitting (i.e. self-tapping). In this example, the toothed surface takes the form of one or more helical threads 8, i.e. a tooth that spirals around the tapered portion 7 in a helical path (narrowing in diameter towards one end). Across the thread (i.e. substantially perpendicular to the helix and therefore in a substantially axial direction), are formed grooves (or flutes) 9 that break the helical tooth (or teeth in the case of a multi-start thread) into a number of partial-helices. These grooves 9 allow any debris generated as part of the cutting process to enter the grooves 9 and either remain there or be carried out of the joint area so as to prevent seizing or added friction during assembly. Flutes or grooves 9 may provide a lower channel than the thread for any composite (shaft) debris to accumulate.

To assemble the joint shown in Fig. 1 the end fitting 2 is first driven axially in the direction of arrow 10 until it is in close proximity (adjacent or even touching) the interface region 6 of shaft 1. The end fitting 2 is then rotated in the direction that will screw the helical thread 8 into the interface region 6 while at the same time being driven axially (also in the direction of arrow 10) in a controlled fashion so that it moves axially at a rate of one thread pitch per rotation. This ensures that the helical thread 8 follows the correct path and minimises damage during the engagement process. In other examples driving may not be required as the threading process will provide the axial force to draw the end fitting onto the shaft. As the taper allows a large amount of overlap to be achieved before the two parts come into contact, the amount of rotation that is required to fully engage the two tapered surfaces is significantly reduced compared with two non-tapered surfaces. However there will still be a high friction to be overcome and therefore it is preferred to apply a lubricant to facilitate the engagement. Preferably the lubricant is also an adhesive which will set (or can be cured) after engagement.. The adhesive may seal the joint. The lubricant will also help to reduce and absorb heat that is generated due to friction during engagement, thus helping to prevent heat damage to the resin matrix and filaments 4 of the shaft 1. The helical thread(s) 8 provide a good connection for transmitting axial loads such as compression and tension forces. The helix angle of the threads 8 may be adjusted according to the purpose. For example a high helix angle (as close as possible to 90 degrees to the shaft axis) is best for axial loads, while a shallower angle is better for torsional loads. A zero degree angle (i.e. for spline fittings) is optimal for torque transmission. A 45 degree angle may be used for mixed torque/axial loading.

The taper of the interface region 6 and the end fitting surface 7 ensures that the engagement of the two surfaces occurs across the thickness of the shaft 1. Thus there is engagement between all (or substantially all) layers or plies of filaments 4 of shaft 1 and the end fitting 2. This distributes the force transmission amongst the filaments 4 so that the load is shared more evenly. Thus the joint does not rely on just a few surface filaments which could result in delamination if high forces are applied.

The hoop fibres 5 discussed above are not essential to the process. In some examples, they may simply not be required. In other examples, the hoop stiffness could be achieved through a press fitted additional part (e.g. a metal ring or hoop-wound composite ring) which may be left in place or removed after joint assembly.

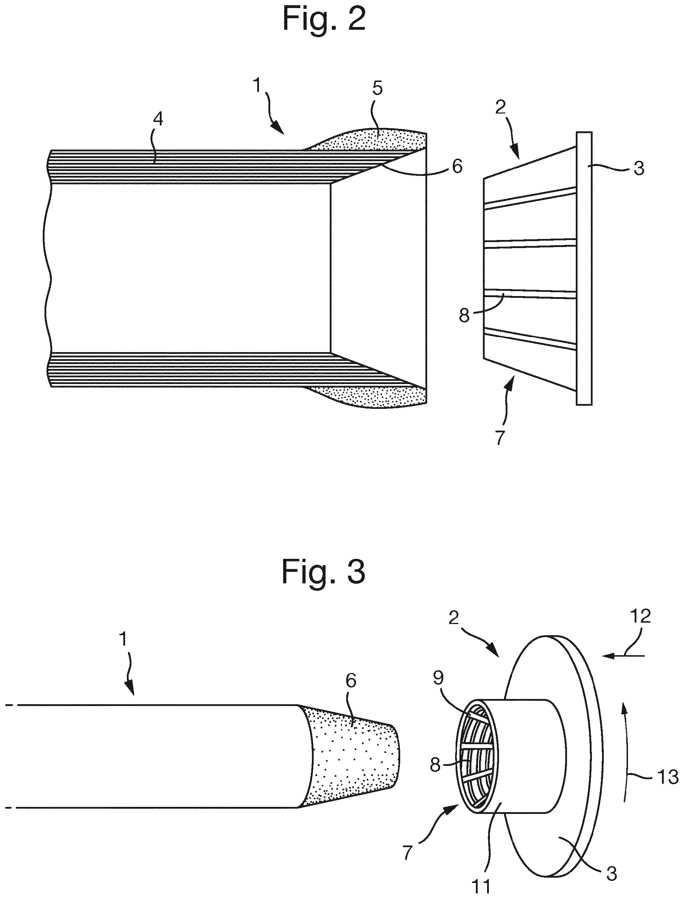

Fig. 2 is similar to Fig. 1 in most respects and the same reference numerals are used to depict the same features. The difference is that the teeth 8 are not helical threads, but instead are splines which extend in a substantially axial direction, although with a radial component due to the taper. Each spline 8 extends straight such that it is in a plane with the axis of the shaft 1. The use of splines 8 rather than a helical thread is better for torque transmission than for axial loading (compression/tension). The engagement process will not involve any rotation of the end fitting 2, but will instead simply be an axial drive to engage the teeth 8 of the end fitting 2 with the interface region 6 of the shaft 1. Again, a lubricant (preferably an adhesive) may be used to reduce the friction of this engagement process and reduce the generated heat.

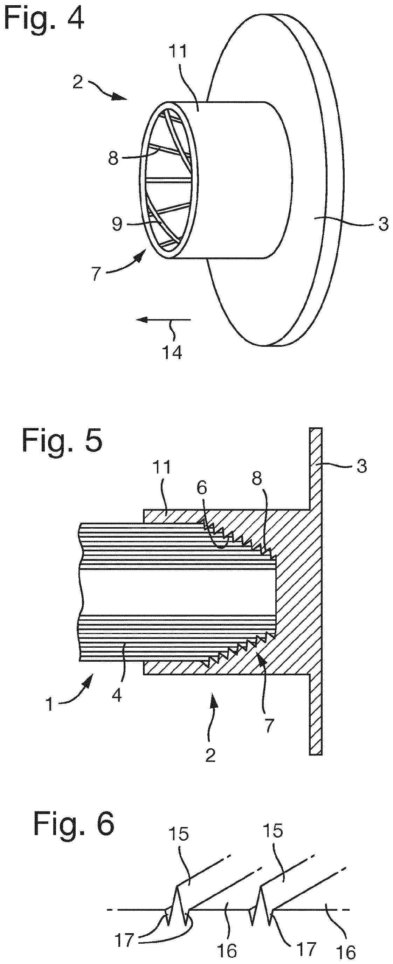

While Figs. 1 and 2 show the interface region 6 formed on an internal surface of the shaft 1, Fig. 3 shows the interface region 6 formed on an external surface of the shaft 1, according to an example which is not an embodiment of the present invention. In this configuration the end of the shaft 1 is convex rather than concave. Correspondingly, the end fitting 2 is concave with the tapered toothed surface 7 formed on the inside of a cylindrical hub 11. Fig. 3 shows an end fitting with a helical thread 8, while Fig. 4 shows an end fitting with spline teeth 8, which again is not an embodiment of the present invention. In Fig. 3, the helical thread 8 is crossed by grooves or flutes 9 which extend substantially axially. In Fig. 4, the groove(s) or flute(s) 9 are formed in a helix so as to cross the axial splines 8.

The engagement process for Figs. 3 and 4 is much the same as for Figs. 1 and 2 respectively, with the end fitting 2 of Fig. 3 being driven axially in the direction of arrow 12 at a rate of one thread pitch per rotation, while being rotated in the direction of arrow 13. The end fitting 2 of Fig. 4 is simply driven axially in the direction of arrow 14. Lubricant / adhesive may be applied as described above.

It can be seen that the examples of Figs. 3 and 4 do not require hoop fibre (such as reference number 5 of Figs. 1 and 2) to support the joint. If support is required (e.g. if the shaft 1 is hollow) a plug may be inserted (permanently or temporarily) in the hollow centre of the shaft 1 prior to engagement. The plug may be in the form of a metal or hoop-wound composite ring.

The hoop fibre 5 of Figs. 1 and 2 may not be required after joint assembly and may thereafter by cut off (e.g. sliced off) for additional weight saving.

Fig. 5 illustrates a joint formed from an end fitting 2 mounted to a shaft 1 similar to those shown in Fig. 3, with a helical thread tooth 8 which has cut into the interface region 6, according to an example which is not an embodiment of the present invention.

Fig. 6 shows one example of a tooth profile that may be used for the helical thread 8 and/or the axial splines 8. The tooth profile is formed from cutting portions 15, with land portions 16 in between such that the profile alternates between cutting portions 15 and land portions 16. Either side of each cutting portion 15 there is a gully or channel 17 that allows for collection of a small amount of cut material. When grooves or flutes 9 are provided, these channels 17 feed into the larger grooves 9 for evacuating material from the cutting area.

The joints described above are structurally efficient in that they achieve an excellent bond between the shaft 1 and end-fitting 2 with a relatively small quantity of metal (or other material), thus reducing weight and cost. The joint is also mechanically simple to manufacture and join in that it can be made as a single component.

The use of a tapered interface region and tapered toothed surface allow many layers of plies to be exposed without special design of the shaft 1. Thus the shaft 1 can be manufactured using a generic process and in longer lengths and then cut to the desired size. The interface region 6 can then be cut or ground onto the shaft 1 after the shaft 1 has been cut to size. This greatly simplifies the manufacturing process as it is not necessary to make each rod individually to the right length to begin with.

The above examples may be used for tension and compression struts and rods, including piston rods. One area of particular application is the aerospace industry where weight savings are especially important, but this disclosure is not limited to aerospace applications and also encompasses other uses, e.g. automotive applications. The examples of this disclosure have the following benefits: large weight saving due to the simplicity of the interface (high strength to weight ratio), inherently corrosion resistant due to the materials involved, improved fatigue performance by ensuring load sharing across the thickness of the shaft. These designs use the load carrying properties of the fibre rather than relying on the interlaminar shear strength of the composite that is largely dependent on the resin system.

## Claims

1. A composite shaft (1) with an end fitting (2) mounted on an interface region (6) on at least one end of said shaft (1) wherein said shaft (1) is a hollow tube,
wherein in said interface region (6) the shaft (1) is tapered by a material removal process; and
wherein said end fitting (2) comprises a surface with matching taper, the surface engaging with said interface region (6);
wherein the tapered surface of the end fitting (2) is a toothed surface;
wherein the shaft (1) is a filament-wound shaft, **characterised in that** said taper is formed on the inside of said shaft (1), wherein the tapered interface region (6) exposes a plurality of layers of filaments to the surface of the end fitting (2), and wherein contact between the tapered interface region (6) and the surface of the end fitting results in engagement of the toothed surface with the shaft (1).

2. A shaft (1) as claimed in claim 1, wherein the taper is at an angle to the shaft axis of no more than 20 degrees, preferably no more than 10 degrees, more preferably no more than 7 degrees.

3. A shaft (1) as claimed in any preceding claim, wherein said end fitting (2) surface is a toothed surface and comprises a plurality of teeth, each tooth formed as an axial spline engaging with said interface region (6).

4. A shaft (1) as claimed in any of claims 1 or 2, wherein said end fitting surface is a toothed surface and comprises at least one tooth (8) formed as a helical thread engaging with said interface region.

5. A shaft (1) as claimed in claim 3 or 4, wherein said end fitting (2) further comprises grooves (9) that cross the teeth of the toothed surface.

6. A shaft (1) as claimed in claim 5, wherein said grooves (9) are axial grooves or helical grooves.

7. A method of mounting an end fitting (2) onto a filament-wound shaft (1),
wherein the shaft (1) is a hollow tube comprising an interface region that is tapered by a material removal process, wherein the taper is formed on the inside of said shaft;
the end fitting (2) comprising a surface with a matching taper, the surface being a toothed surface;
the method comprising engaging said end fitting (2) onto said shaft (1),
wherein the tapered interface region exposes a plurality of layers of filaments to the surface of the end fitting, such that contact between the tapered interface region and said surface of the end fitting results in engagement of the toothed surface with said interface region (6).

8. A method as claimed in claim 7, wherein:
the end fitting (2) comprises a toothed surface with a helical thread; and
the method comprises screwing said end fitting (2) onto said shaft (1) while the end fitting (2) is driven axially at a rate equal to one thread pitch per rotation.

9. A method as claimed in claim 7 or 8, wherein the tapered interface region (6) is formed on an internal surface of the shaft (1) by winding filaments (4) around the external surface of the shaft (1) at the axial position of the interface region (6) and then cutting or grinding the internal surface to form the taper.

10. A method as claimed in any of claims 7 to 9, wherein the shaft (1) is formed by cutting a length from a longer shaft (1) and subsequently forming said interface region (6) adjacent to said cut.

## Patentansprüche

1. Verbundwelle (1) mit einem Endstück (2), das an einem Übergangsbereich (6) an mindestens einem Ende der Welle (1) montiert ist, wobei die Welle (1) ein hohles Rohr ist,
wobei in dem Übergangsbereich (6) die Welle (1) durch einen Materialabtragungsvorgang verjüngt ist; und
wobei das Endstück (2) eine Fläche mit passender Verjüngung umfasst, wobei die Fläche in den Übergangsbereich (6) eingreift;
wobei die sich verjüngende Fläche des Endstücks (2) eine gezahnte Fläche ist;
wobei die Welle (1) eine fadengewickelte Welle ist, **dadurch gekennzeichnet, dass** die Verjüngung an der Innenseite der Welle (1) ausgebildet ist, wobei der sich verjüngende Übergangsbereich (6) eine Vielzahl von Fadenschichten der Fläche des Endstücks (2) gegenüber freilegt, und wobei ein Kontakt zwischen dem sich verjüngenden Übergangsbereich (6) und der Fläche des Endstücks zu einem Eingriff der gezahnten Fläche in die Welle (1) führt.

2. Welle (1) nach Anspruch 1, wobei die Verjüngung in einem Winkel zur Wellenachse von nicht mehr als 20 Grad steht, bevorzugt nicht mehr als 10 Grad, besonders bevorzugt nicht mehr als 7 Grad.

3. Welle (1) nach einem der vorstehenden Ansprüche, wobei die Fläche des Endstücks (2) eine gezahnte Fläche ist und eine Vielzahl von Zähnen umfasst, wobei jeder Zahn wie ein axialer Keil geformt ist, der in den Übergangsbereich (6) eingreift.

4. Welle (1) nach einem der Ansprüche 1 oder 2, wobei die Fläche des Endstücks eine gezahnt Fläche ist und mindestens einen Zahn (8) umfasst, der wie ein spiralförmiges Gewinde geformt ist, das in den Übergangsbereich eingreift.

5. Welle (1) nach Anspruch 3 oder 4, wobei das Endstück (2) ferner Rillen (9) umfasst, die die Zähne der gezahnten Fläche kreuzen.

6. Welle (1) nach Anspruch 5, wobei die Rillen (9) axiale Rillen oder spiralförmige Rillen sind.

7. Verfahren zum Montieren eines Endstücks (2) auf eine fadengewickelte Welle (1),
wobei die Welle (1) ein hohles Rohr ist, das einen Übergangsbereich umfasst, der durch einen Materialabtragungsvorgang verjüngt ist,
wobei die Verjüngung an der Innenseite der Welle ausgebildet ist;
wobei das Endstück (2) eine Fläche mit passender Verjüngung umfasst, wobei die Fläche eine gezahnte Fläche ist;
wobei das Verfahren das Eingreifen des Endstücks (2) in die Welle (1) umfasst, wobei der sich verjüngende Übergangsbereich eine Vielzahl von Fadenschichten der Fläche des Endstücks gegenüber freilegt, so dass ein Kontakt zwischen dem sich verjüngenden Übergangsbereich und der Fläche des Endstücks zu einem Eingriff der gezahnten Fläche in den Übergangsbereich (6) führt.

8. Verfahren nach Anspruch 7, wobei:
das Endstück (2) eine gezahnte Fläche mit einem spiralförmigen Gewinde umfasst; und
das Verfahren das Schrauben des Endstücks (2) auf die Welle (1) umfasst, während das Endstück (2) axial mit einer Geschwindigkeit, die einer Gewindesteigung je Umdrehung entspricht, angetrieben wird.

9. Verfahren nach Anspruch 7 oder 8, wobei der sich verjüngende Übergangsbereich (6) an einer Innenfläche der Welle (1) durch Wickeln von Fäden (4) um die Außenfläche der Welle (1) an der axialen Position des Übergangsbereichs (6) und dann Schneiden oder Schleifen der Innenfläche, um die Verjüngung auszubilden, ausgebildet ist.

10. Verfahren nach einem der Ansprüche 7 bis 9, wobei die Welle (1) durch Abschneiden eines Stücks von einer längeren Welle (1) und anschließendes Ausbilden des Übergangsbereichs (6) angrenzend an den Schnitt ausgebildet wird.

## Revendications

1. Arbre composite (1) muni d'un raccord d'extrémité (2) monté sur une région d'interface (6) sur au moins une extrémité dudit arbre (1) dans lequel ledit arbre (1) est un tube creux,
dans lequel dans ladite région d'interface (6) l'arbre (1) est effilé par le biais d'un processus de retrait de matière ; et
dans lequel ledit raccord d'extrémité (2) comprend une surface avec un effilage correspondant, la surface venant en prise avec ladite région d'interface (6) ;
dans lequel la surface effilée du raccord d'extrémité (2) est une surface dentée ;
dans lequel l'arbre (1) est un arbre bobiné, **caractérisé en ce que** ledit effilage est formé sur l'intérieur dudit arbre (1), dans lequel la région d'interface effilée (6) expose une pluralité de couches de filaments à la surface du raccord d'extrémité (2), et dans lequel le contact entre la région d'interface effilée (6) et la surface du raccord d'extrémité entraîne la mise en prise de la surface dentée avec l'arbre (1).

2. Arbre (1) selon la revendication 1, dans lequel l'effilage forme un angle par rapport à l'axe d'arbre d'au maximum 20 degrés, de préférence d'au maximum 10 degrés, plus préférablement d'au maximum 7 degrés.

3. Arbre (1) selon une quelconque revendication précédente, dans lequel ladite surface de raccord d'extrémité (2) est une surface dentée et comprend une pluralité de dents, chaque dent étant formée comme une cannelure axiale venant en prise avec ladite région d'interface (6).

4. Arbre (1) selon l'une quelconque des revendications 1 ou 2, dans lequel ladite surface de raccord d'extrémité est une surface dentée et comprend au moins une dent (8) formée comme un filet hélicoïdal venant en prise avec ladite région d'interface.

5. Arbre (1) selon la revendication 3 ou 4, dans lequel ledit raccord d'extrémité (2) comprend en outre des rainures (9) qui croisent les dents de la surface dentée.

6. Arbre (1) selon la revendication 5, dans lequel lesdites rainures (9) sont des rainures axiales ou des rainures hélicoïdales.

7. Procédé de montage d'un raccord d'extrémité (2) sur un arbre bobiné (1),
dans lequel l'arbre (1) est un tube creux comprenant une région d'interface qui est effilée par le biais d'un processus de retrait de matière,
dans lequel l'effilage est formé sur l'intérieur dudit arbre ;
le raccord d'extrémité (2) comprenant une surface avec un effilage correspondant, la surface étant une surface dentée ;
le procédé comprenant la mise en prise dudit raccord d'extrémité (2) sur ledit arbre (1), dans lequel la région d'interface effilée expose une pluralité de couches de filaments à la surface du raccord d'extrémité, de sorte qu'un contact entre la région d'interface effilée et ladite surface du raccord d'extrémité entraîne la mise en prise de la surface dentée avec ladite région d'interface (6).

8. Procédé selon la revendication 7, dans lequel :
le raccord d'extrémité (2) comprend une surface dentée avec un filet hélicoïdal ; et
le procédé comprend le vissage dudit raccord d'extrémité (2) sur ledit arbre (1) tandis que le raccord d'extrémité (2) est entraîné axialement à une vitesse égale à un pas de filet par rotation.

9. Procédé selon la revendication 7 ou 8, dans lequel la région d'interface effilée (6) est formée sur une surface interne de l'arbre (1) en enroulant des filaments (4) autour de la surface externe de l'arbre (1) dans la position axiale de la région d'interface (6) puis en découpant ou en meulant la surface interne pour former l'effilage.

10. Procédé selon l'une quelconque des revendications 7 à 9, dans lequel l'arbre (1) est formé en découpant une longueur d'un arbre plus long (1) et en formant ensuite ladite région d'interface (6) adjacente à ladite découpe.
